# FASCICULE DE BREVET EUROPEEN

(11) **EP 0 993 868 B1**
(45) Date de publication et mention de la délivrance du brevet: **03.02.2016**
(21) Numéro de dépôt: 99402400.8
(22) Date de dépôt: 30.09.1999
(51) Int. Cl.: B01J 23/85, B01J 23/882, B01J 23/883, B01J 23/888, B01J 37/20, B01J 37/02

(54) **Présulfuration hors site en présence de molécule hydrocarbonée**
Ex-Situ Vorschwefelung in Gegenwart eines Kohlenwasserstoffes
Ex-situ presulfiding in the presence of a hydrocarbon

(30) Priorité: 12.10.1998 FR 9812739
(43) Date de publication de la demande: 19.04.2000
(73) Titulaire: EURECAT SA., 07800 La Voulte-sur-Rhône (FR)
(72) Inventeur: Dufresne, Pierre, 26000 Valance (FR); Labruyere, Franck, 07800 St.Georges Les Bains (FR)
(74) Mandataire: Schmitt, Nicolas A.J.

(56) Documents cités:
- EP-A- 0 396 206
- EP-A- 0 564 317
- EP-A- 0 785 022
- FR-A- 1 359 378
- GB-A- 1 324 034
- GB-A- 1 553 616
- US-A- 5 338 717

## Description

### Objet de l'invention :

Les catalyseurs d'hydroconversion d'hydrocarbures et notamment d'hydrotraitement de coupes pétrolières contiennent généralement au moins un élément du groupe VIII ou du groupe VI de la classification périodique ou une combinaison de plusieurs éléments issus de ces mêmes groupes, déposés sur un support oxyde, amorphe par exemple zéolithique comme par exemple les solides désignés CoMo/Al₂O₃ ; NiMo/Al₂O₃ ou NiW/Al₂O₃. Pour permettre aux catalyseurs d'être actifs pour les différentes réactions de l'hydrotraitement, à savoir l'hydrodésulfuration, l'hydrodéazotation , la démétallation ou démétallisation et certains types d'hydrogénation, il est souhaitable de procéder à une sulfuration des métaux dans le but de créer la phase active de type sulfure mixte. Cette étape de pré-conditionnement doit être effectuée avec le plus grand soin puisqu'elle conditionne l'activité future du produit dans son utilisation ultérieure. Elle peut s'effectuer selon deux modes distincts. La technique conventionnelle, dite de sulfuration in-situ, consiste à réaliser ce prétraitement après le chargement du catalyseur, dans le réacteur de conversion d'hydrocarbures.

L'autre façon d'activer ce type de catalyseur est de réaliser une sulfuration ex-situ, c'est à dire en dehors du réacteur d'hydrotraitement comme décrit dans divers brevets de la demanderesse, par exemple USP4719195, USP 5139983, USP 5397756, EP-A 785022. L'objet de la présente invention est de procéder à une présulfuration ex-situ du catalyseur en présence d'hydrogène et un composé sulfuré qui est l'hydrogène sulfuré. L'invention est caractérisée en ce que, en vue d'améliorer la sulfuration ou présulfuration, le catalyseur est mis en contact avec au moins un composé hydrocarboné. Ce composé hydrocarboné est ajouté dans une étape préliminaire à l'étape de présulfuration.Le procédé objet de la demande opère selon les revendications 1 à 5.

Donc, la mise en contact du catalyseur avec le composé hydrocarboné est réalisée dans une étape préliminaire à l'étape de sulfuration. Dans ce cas, le composé hydrocarboné peut être déposé par toute technique, par exemple par la technique d'imprégnation à sec du catalyseur par le composé hydrocarboné. Cette imprégnation se fait à froid c'est-à-dire à température ordinaire. Il suffira le plus souvent d'introduire le composé hydrocarboné dans la porosité du catalyseur au moins superficiellement. Il n'est pas nécessaire d'aller « au volume poreux ». Donc on remplit en totalité ou au moins en partie le volume poreux du catalyseur. De préférence, au cours de ce traitement, on imprègne par exemple 10 à 100 % du volume poreux total de catalyseur, et plus particulièrement 30 à 100 %, par le dit composé hydrocarboné.

Le dit composé hydrocarboné est choisi dans le groupe constitué par les hydrocarbures liquides, mais plus particulièrement les composés contenant de l'oxygène, et notamment les alcools, les acides, les cétones, les aldéhydes et autres composés renfermant de l'oxygène. On peut utiliser également les huiles végétales, les composés azotés, et plus particulièrement également les bases huile ou lube base par exemple type 150 Neutral (150 N), les gazoles et éventuellement les white spirit. Ces derniers étaient déjà utilisés dans des procédés antérieurs de présulfuration de catalyseurs mais ils étaient utilisés en tant que solvants vecteurs des composés sulfurés avec lesquels on présulfurait les catalyseurs (polysulfures organiques notamment), alors qu'ici le catalyseur est imprégné préalablement dans sa porosité, de ces white spirit.

La phase de sulfuration est conduite à pression atmosphérique dans un système rotatif chauffé entre environ 200 et 500°C. Dans le mélange gazeux hydrogène/hydrogène sulfuré, les pressions partielles d'hydrogène sulfuré peuvent varier dans un domaine de 0.05 à 0.7. L'introduction des réactifs est effectuée au point d'injection du solide initial ou alors au point d'éjection du solide final, la sulfuration est alors dite respectivement sulfuration à Co courant ou sulfuration à Contre courant.

Une explication potentielle du bénéfice apporté par la sulfuration en présence de composé carboné consiste en un effet thermique. Les réactions de transformation de ces phases oxydes en phase sulfures sont très exothermiques. Si cette production de chaleur est mal contrôlée, elle peut conduire à des échauffements importants du lit de catalyseur, ce qui au delà des problèmes évidents de sécurité du procédé, peut conduire à la formation de phases sulfures peu dispersées. Ce frittage de la phase active induirait des propriétés catalytiques médiocres. Un des moyens d'améliorer le contrôle de la température lors de la sulfuration consiste à imprégner le catalyseur oxyde d'un composé hydrocarboné avant l'étape proprement dite de sulfuration. Cet ajout sert vraisemblablement de puits thermique pendant l'étape exothermique de sulfuration, et permet d'amortir sensiblement l'augmentation de température notamment au coeur du grain. Le choix de ce composé hydrocarboné sera effectué dans la large gamme des composés organiques, comportant ou non un groupe fonctionnel.

Une autre explication potentielle du bénéfice apporté par cette invention peut être la suivante : le mécanisme de la sulfuration d'une phase oxyde comme le mélange d'oxydes MoO₃/CoO ou NiO supportés sur alumine implique une recomposition complète et une migration des espèces à la surface du support. Les structures des phases initiale et finale sont abondamment décrites dans la littérature. La phase oxyde est constituée d'espèces bien dispersées en surface de l'alumine, comme des polymolybdates ou tungstates associés à des oxydes de cobalt ou nickel. La phase active est structurellement très différente de cette phase oxyde. Elle se présente sous forme de feuillets polygonaux de sulfure de molybdène ou de tungstène, empilés en général en petit nombre de 1 à 5 pour des préparations conventionnelles, les atomes de cobalt ou de nickel, dits promoteurs, étant situés en périphérie de ces feuillets. Il est admis que l'activité catalytique est fonction de la structure fine de cette phase mixte et plus précisément de la localisation de ces atomes de bord, qu'elle soit en position d'arête ou de coin de ces feuillets souvent hexagonaux. Il est possible d'envisager que la nécessaire migration des espèces puisse être influencée par la présence ou non d'espèces hydrocarbonées à la surface du solide, modifiant ainsi légèrement la structure de la phase mixte. Une autre hypothèse consiste à avancer que le carbone lui même puisse faire partie de la phase active et donc modifier ainsi directement les propriétés catalytiques. Cette intervention du carbone serait évidemment différente de celle, plus connue, du dépôt de coke au cours du cycle d'utilisation du produit, provoquant la baisse progressive des performances du catalyseur.

### Exemples :

### Exemple 1 (comparatif) : ici, avant ou pendant la présulfuration, il n'y a pas de mise en contact du catalyseur avec un composé hydrocarboné.

Un catalyseur oxyde contenant 18.9% de MoO₃ et 4.2% de CoO et un support d'alumine est introduit dans un four rotatif alimenté par un mélange gazeux sulfo-réducteur d'hydrogène et de sulfure d'hydrogène à des pressions partielles respectives de 0.8 et 0.2 bar, le gaz et le solide circulant à contre courant. La sulfuration du solide est obtenue par augmentation progressive de la température lors du déplacement du solide à l'intérieur du tube tournant, jusqu'à une température maximale de 330°C, le temps de résidence à l'intérieur du four étant d'environ 4 heures. Après refroidissement du solide sous atmosphère réactionnelle et purge sous azote, celui-ci est mis au contact d'air dilué par l'azote de telle façon que sa température reste inférieure à 45°C. Ce catalyseur sulfuré peut ensuite être manipulé sous air et caractérisé au niveau de sa teneur en soufre et carbone (appareil de marque LECO). Le taux de sulfuration est défini comme étant le rapport entre la teneur en soufre mesurée, exprimé sur base sèche après correction de la perte au feu à 500°C, et la teneur théorique correspondant aux phases sulfures MoS₂ et Co₉S₈, soit 10.02% de soufre.

On procède également à son évaluation catalytique en hydrodésulfuration d'une coupe pétrolière. L'unité de test catalytique est alimentée par une charge synthétique de densité 0.902 et teneur en soufre 1.70 %poids, obtenue par mélange à iso teneur de LCO (gasoil de craquage catalytique) et de gasoil de distillation directe. La pression d'hydrogène est de 3 MPa (30 bar) et la vitesse volumique horaire WH de 1 h⁻¹, la température de 330°C. Les effluents liquides sont collectés pendant une période de 40 heures en conditions stabilisées et leur teneur en soufre mesurée par fluorescence X. L'activité d'ordre 1.5 est ensuite calculée et comparée à celle obtenue lors d'un test de référence. Celui-ci est effectué sur le catalyseur oxyde dans les mêmes conditions si ce n'est que la période de démarrage comporte une étape de sulfuration en présence de la charge gasoil de distillation directe additivée de 7% poids de Diméthyl disulfure. Les résultats sont les suivants :

| | **Traitement** | **Sulfuration Condition opératoire** | **Taux de sulfuration avant test %** | **Taux de sulfuration après test %** | **Taux de Conversion HDS%** | **Activité HDS** | **Activité relative%** |
|---|---|---|---|---|---|---|---|
| **exemple 1** | Ex situ Phase gaz H2S-H2 | T=330°C | 95.2 | 99.6 | 97.00 | 4.28 | 102 |
| | In situ Phase liquide DMDS-H2 | T=330°C | - | 100.8 | 96.90 | 4.20 | 100 |

### Exemple 2 conforme à l'invention

Le même catalyseur CoMo/Al₂O₃ est imprégné à température ordinaire par une coupe hydrocarbonée de type gasoil (gazole) de distillation directe de point d'ébullition initial et final 250°C et 350°C respectivement et de densité 0.837. La quantité imprégnée est de 39.0%pds par rapport au poids d'oxyde, ce qui correspond à 90% du volume poreux disponible. Après imprégnation, le solide est traité dans le four rotatif aux mêmes conditions qu'à l'exemple 1, soit 330°C, 4 heures et mélange H2/H2S, puis refroidissement sous atmosphère réactionnelle, purge sous azote et passivation oxydante. Le taux de sulfuration de ce catalyseur ainsi obtenu est de 98.4% et le pourcentage de carbone résiduel exprimé par rapport à la base oxyde est de 3.9%pds. L'écart entre la quantité de carbone imprégné et la quantité de carbone résiduel représente la quantité d'hydrocarbures évaporée pendant la phase de sulfuration.

La conduite du test est réalisée comme décrit dans l'exemple 1, l'activité résultante pour ce type de préparation est améliorée comme indiqué ci-après :

| | **Traitement** | **Sulfuration Condition opératoire** | **Taux de sulfuration avant test %** | **Taux de sulfuration après test %** | **Taux de Conversion HDS %** | **Activité HDS** | **Activité relative %** |
|---|---|---|---|---|---|---|---|
| **exemple 2** | Ex situ gasoil H2S-H2 | T=330°C | 98.4 | 99.6 | 97.27 | 4.54 | 108 |

### Exemple 3 :

Cet exemple est analogue à l'exemple n° 2, si ce n'est que la source hydrocarbonée est une huile minérale de base de type 150 Neutral, de masse volumique 0.89 g/cm³ et de viscosité 119 mm²/s et que la quantité d'huile imprégnée sur la base oxyde est de 12.0% pds, ce qui correspond à 90 % environ du volume poreux disponible. Les analyses effectuées sur ce catalyseur montrent qu'à l'issue de ce traitement le solide est parfaitement sulfuré et que la quantité de carbone résiduelle est de 5.2%pds par rapport à la base oxyde.

Le niveau d'activité en hydrodésulfuration est encore légèrement amélioré par rapport aux références de l'exemple 1.

| | **Traitement** | **Sulfuration Condition opératoire** | **Taux de sulfuration avant test %** | **Taux de sulfuration après test %** | **Taux de Conversion HDS %** | **Activité HDS** | **Activité relative %** |
|---|---|---|---|---|---|---|---|
| **exemple 3** | Ex situ gasoil H2S-H2 | T=330°C | 101.4 | 102.0 | 97.18 | 4.45 | 106 |

### Exemple 4 :

Le même catalyseur CoMo/Al2O3 est imprégné à température ordinaire par une coupe hydrocarbonée de type white spirit de point d'ébullition initial et final 180°C et 220°C respectivement et de densité 0.70. La quantité imprégnée est de 8,1 % pds par rapport au poids d'oxyde, ce qui correspond à 20 % du volume poreux disponible. Après imprégnation, le solide est traité dans le four rotatif aux mêmes conditions qu'à l'exemple 1, soit 330°C, 4 heures et mélange H2/H2S, puis refroidissement sous atmosphère réactionnelle, purge sous azote et passivation oxydante. Le taux de sulfuration de ce catalyseur ainsi obtenu est de 95.6 % et le pourcentage de carbone résiduel exprimé par rapport à la base oxyde est de 0.6 % pds. L'écart entre la quantité d'hydrocarbures évaporée pendant la phase de sulfuration.

La conduite du test est réalisée comme décrit dans l'exemple 1, l'activité résultante pour ce type de préparation est indiquée ci-dessous :

| | **Traitement** | **Sulfuration Condition opératoire** | **Taux de sulfuration avant test %** | **Taux de sulfuration après test %** | **Taux de Conversion HDS %** | **Activité HDS** | **Activité relative %** |
|---|---|---|---|---|---|---|---|
| **exemple 4** | Ex situ gasoil H2S-H2 | T=330°C | 95.6 | 100.1 | 97.09 | 4.36 | 104 |

## Revendications

1. Procédé de présulfuration ex-situ d'un catalyseur d'hydroconversion d'hydrocarbures, ce catalyseur contenant au moins un métal du groupe VIII ou VI de la classification périodique des éléments déposé sur un support oxyde, le dit procédé de présulfuration étant effectué en présence d'hydrogène et en présence d'au moins un composé sulfuré, le procédé consistant en ce que,
- avant le traitement de présulfuration, on remplit par imprégnation au moins en partie le volume du catalyseur par au moins un composé hydrocarboné, ledit (lesdits) composé(s) hydrocarboné(s) étant choisis dans le groupe constitué par les hydrocarbures liquides, les bases huiles, les gazoles, les white-spirit, les huiles végétales, les composés azotés et les composés contenant de l'oxygène choisis dans le groupe constitué par les alcools, les acides, les cétones et les aldéhydes, et en ce que
- la phase de présulfuration est conduite en présence de composé hydrocarboné à pression atmosphérique dans un système rotatif chauffé entre 200-500°C, en présence d'hydrogène, présulfuration dans laquelle le composé sulfuré est l'hydrogène sulfuré, l'introduction des réactifs qui sont un mélange gazeux hydrogène/ hydrogène sulfuré où les pressions partielles d'hydrogène sulfuré varient entre 0.05 à 0.7, est effectuée au point d'injection du solide initial ou au point d'éjection du solide final.

2. Procédé selon la revendication 1 dans lequel le support oxyde est amorphe

3. Procédé selon l'une des revendications précédentes dans lequel on remplit 10 à 100 % du dit volume poreux par ledit composé hydrocarboné.

4. Procédé selon la revendication 3 dans lequel on remplit 30 à 100 % du dit volume poreux par ledit composé hydrocarboné .

5. Procédé selon l'une des revendications précédentes dans lequel le composé hydrocarboné est choisi dans le groupe constitué par les bases huile, les gazoles, les white-spirit.

## Patentansprüche

1. Verfahren zur ex-situ Vorsulfurierung eines Hydroconversionskatalysators für Kohlenwasserstoffe, wobei der Katalysator mindestens ein, auf einem oxidischen Träger abgeschiedenes, Metall der Gruppe VIII oder VI des Periodensystems der Elemente aufweist, wobei das Verfahren der Vorsulfurierung in Gegenwart von Wasserstoff und in Gegenwart von mindestens einer sulfurierten Verbindung durchgeführt wird, wobei das Verfahren darin besteht,
- Dass man vor der Vorsulfurierungsbehandlung mittels Imprägnation wenigstens teilweise das Katalysatorvolumen mit wenigstens einer Kohlenwasserstoffzusammensetzung füllt, wobei die Kohlenwasserstoffzusammensetzung(en) ausgewählt sind aus der Gruppe gebildet durch die flüssigen Kohlenwasserstoffe, den Basisölen, den Gasölen, den Mineralterpentinölen, den Pflanzenölen, den stickstoffhaltigen Verbindungen und den sauerstoffhaltigen Verbindungen ausgewählt aus der Gruppe gebildet durch die Alkohole, die Säuren, die Ketone und die Aldehyde und darin,
- Dass die Stufe der Vorsulfurierung bei Atmosphärendruck in Gegenwart der kohlenwasserstoffhaltigen Zusammensetzung in einem auf 200 bis 500°C erhitzten rotierenden System in Gegenwart von Wasserstoff durchgeführt wird, wobei die schwefelhaltige Verbindung bei der Vorsulfurierung Schwefelwasserstoff ist, wobei die Einführung der Reaktanden, die eine gasförmige Mischung aus Wasserstoff/Schwefelwasserstoff sind, wobei die Schwefelwasserstoff-Partialdrucke zwischen 0,05 und 0,7 variierten, durchgeführt wird am Injektionspunkt des ursprünglichen Feststoffes oder am Auswurfpunkt der finalen Feststoffe.

2. Verfahren gemäß Anspruch 1, bei dem das oxidische Trägermaterial amorph ist.

3. Verfahren gemäß einem der vorherigen Ansprüche, bei dem man 10 bis 100% des Porenvolumens mit der kohlenwasserstoffhaltigen Zusammensetzung füllt.

4. Verfahren gemäß Anspruch 3, bei dem man 30 bis 100 % des Porenvolumens mit der kohlenwasserstoffhaltigen Zusammensetzung füllt.

5. Verfahren gemäß einem der vorhergehenden Ansprüche, bei dem die kohlenwasserstoffhaltige Zusammensetzung gewählt ist aus der Gruppe gebildet durch die Basisöle, die Gasöle, die Mineralterpentinöle.

## Claims

1. Process for the ex-situ presulfuration of a catalyst for the hydroconversion of hydrocarbons, said catalyst containing at least one element of group VIII or group VI of the periodic classification deposited on an oxide support, said process of presulfuration being carried out in the presence of hydrogen and in the presence of at least one sulfurated compound , process consisting in that
- before the presulfuration treatment, at least part of the pore volume of the catalyst is filled by impregnation with at least one hydrocarbon compound, said hydrocarbon compound(s) being chosen from the group constituted by the liquid hydrocarbons, oil bases, diesel oils, white spirits, vegetable oils, nitrogenous compounds, and the compounds containing oxygen chosen from the group constituted by alcohols, acids, ketones and aldehydes and in that
- the presulfuration phase is carried out in the presence of an hydrocarbon compound at atmospheric pressure in a rotary system heated to between 200 and 500°C, in the presence of hydrogen, presulfuration wherein the sulfurated compound is hydrogen sulfide, the introduction of the reagents which are a gaseous hydrogen/ hydrogen sulfide mixture wherein the partial hydrogen sulfide pressures vary within the range of 0.05 to 0.7, is carried out at the point of injection of the initial solid or at the point of ejection of the final solid.

2. Process according to claim 1 in which the oxide support is amorphous.

3. Process according to one of the preceding claims in which 10 to 100% of the said pore volume is filled with the said hydrocarbon compound.

4. Process according to claim 3 in which 30 to 100% of the said pore volume is filled with the said hydrocarbon compound.

5. Process according to one of the preceding claims in which the hydrocarbon compound is chosen from the group constituted by the oil bases, diesel oils, white spirits.
